# FASCICULE DE BREVET EUROPEEN

(11) **EP 1 279 685 B1**
(45) Date de publication et mention de la délivrance du brevet: **07.03.2007**
(21) Numéro de dépôt: 02291669.6
(22) Date de dépôt: 04.07.2002
(51) Int. Cl.: C08F 14/22, C08L 27/16

(54) **Polymère du fluorure de vinylidène à fraction de chaînes non transférées et son procédé de fabrication**
Vinylidenfluoridpolymer mit nicht übertragenem Kettenteil und Verfahren zu seiner Herstellung
Vinylidene fluoride polymer with a part of the chain not transferred and process for its preparation

(30) Priorité: 16.07.2001 FR 0109453
(43) Date de publication de la demande: 29.01.2003
(73) Titulaire: Arkema France, 92800 Puteaux (FR)
(72) Inventeur: Pascal, Thierry, 69390 Charly (FR)
(74) Mandataire: Neel, Henry

(56) Documents cités:
- EP-A- 0 481 509
- EP-A- 0 526 216
- EP-A- 0 670 353
- EP-A- 0 824 120
- WO-A-99/29772
- US-A- 4 076 929

## Description

### [Domaine de l'invention]

Les polymères à base de fluorure de vinylidène (VF2) tels que par exemple le PVDF (polyfluorure de vinylidène) sont connus pour offrir d'excellentes propriétés de stabilité mécanique, une très grande inertie chimique, ainsi qu'une bonne résistance au vieillissement. Ces qualités sont exploitées pour des domaines d'application variés. On citera par exemple, la fabrication de pièces extrudées ou injectées pour l'industrie du génie chimique ou la microélectronique, l'utilisation sous forme de gaine d'étanchéité pour le transport des gaz ou des hydrocarbures, l'obtention de films ou de revêtements permettant la protection dans le domaine architectural, et la réalisation d'éléments protecteurs pour des usages électrotechniques.

### [L'art antérieur et le problème technique]

Les polymères fluorés à base de VF2 et particulièrement le PVDF ont une résistance au choc qui n'est pas toujours suffisante. Cet inconvénient peut avoir des conséquences dramatiques car il peut entraîner la rupture d'une pièce, suite à un choc mécanique ou à un séjour imprévu dans un domaine de température où la résilience du matériau est habituellement très faible (T# - 30°C). L'art antérieur a déjà décrit des compositions de PVDF pour résister au choc.

**Le brevet EP 884358** décrit des compositions à base de poly(fluorure de vinylidène), souples et résilientes. Elles comportent pour 100 parties en poids d'un homopolymère (A) de fluorure de vinylidène (VF2) ou d'un copolymère (A) de VF2 et d'au moins un autre monomère copolymérisable avec VF2, dans lequel pour 100 parties en poids de VF2 ledit monomère est présent en une quantité comprise entre 0 et 30 parties en poids, de 0,5 à 10 parties en poids d'un élastomère B et de 0,5 à 10 parties en poids d'un plastifiant C, avec la condition supplémentaire que la somme de B plus C soit de 1 à 10,5 parties en poids et, d'autre part, en ce que l'homopolymère de fluorure de vinylidène (A) soit choisi de telle sorte qu'il possède un indice de fluidité, mesuré selon la norme ISO 1133 à 230 °C sous une charge de 5 kg, inférieur à 5 g /10 min et un module critique G_{C}, mesuré à 190°C, à l'intersection des modules de cisaillement à l'état fondu G' et G", compris entre 5 et 22 kPa. D'une manière générale, elles conviennent pour la réalisation d'objets, d'articles tels que feuilles, films, gaines de tubes, tuyaux, etc. soumis à des contraintes dans des conditions de haute et/ou de basse température, au contact de substances particulièrement agressives (telles qu'hydrocarbures, acides forts, solvants, bases minérales et organiques) au cours desquelles leurs propriétés de résilience et de souplesse sont particulièrement requises (industries pétrolière et gazière, génie chimique, industries du bâtiment et des travaux publics).

**La demande internationale WO 9929772** décrit le renforcement de PVDF par un copolymère tribloc poly(styrène)-poly(butadiène)-poly(méthacrylate de méthyle). Le PVDF ainsi modifié conserve ses propriétés de résistance chimique.

L'incorporation d'additif plastifiant ou élastomère est efficace, mais elle pose des problèmes d'homogénéisation du mélange et de stabilité thermique ou chimique en fonction à la nature de ces additifs. De plus, la réalisation de formulation avec les plastifiants et/ou les élastomères constitue une étape supplémentaire dans la fabrication de l'objet final.

On a maintenant trouvé qu'un PVDF à fraction de chaînes non transférées avait une très bonne résistance au choc sans qu'il soit nécessaire d'y ajouter des plastifiants ou des modifiants choc. On qualifie ce polymère de "PVDF à fraction de chaînes non transférées" (FCNT) dans la suite du texte. C'est à dire que ce PVDF comprend des chaînes de très haute masse, ce sont les chaînes non transférées, et d'autres chaînes de PVDF qui ont été fabriquées par initiation et transfert. Un moyen très simple de fabriquer ce PVDF à FCNT consiste à commencer la polymérisation du VF2 avec un amorceur (aussi appelé initiateur) qui n'induit pas de réaction de transfert, ainsi qu'en l'absence d'un agent de transfert, puis après qu'une partie du PVDF ait été formée, celle de très haute masse molaire, on ajoute l'agent de transfert (aussi appelé agent régulateur de chaînes). Les chaînes de très haute masse molaire qui correspondent à la FCNT sont totalement insolubles dans les solvants usuels du PVDF tels que la DMF (diméthylformamide), le DMSO (diméthylsulfoxyde), et la NMP (N-méthylpyrolydone). De plus, la fraction de polymère associée à la FCNT présente une viscosité dynamique supérieure à 50 kPoise à 230°C sous une vitesse de cisaillement de 100 s-1.

L'art antérieur a décrit dans le brevet **US 4076929** un PVDF dit bimodal mais il est très différent de celui de la présente invention. Dans cet art antérieur on effectue la polymérisation du VF2 en présence d'un tensioactif et du peroxyde de ditertiobutyle comme initiateur sans ajouter d'agent de transfert de chaîne. En fait le peroxyde de tertiobutyle agit aussi comme agent de transfert de chaîne car une partie des hydrogènes de sa partie hydrocarbonée est labile. Cette fonction de transfert est beaucoup plus faible qu'un agent spécifique de transfert tel que l'acétate d'éthyle mais elle est suffisante pour que les chaînes de PVDF n'atteignent pas de très hautes masses comme dans la présente invention. On fabrique donc essentiellement des chaînes de haute masse, il est précisé en colonne 2 lignes 45-52 que la proportion de chaînes de haute masse est de 30 à 70% et de préférence d'au moins 45%.

L'art antérieur a décrit de nombreux procédés de préparation de PVDF mais n'a jamais décrit un procédé dans lequel on ajoute l'agent de transfert après le début d'une polymérisation déclenchée spécifiquement par un amorceur non organique soluble dans l'eau qui n'induit pas de réaction de transfert. On peut citer pour mémoire les brevets suivants:

Le brevet **EP 387938** décrit la polymérisation du VF2 en l'absence d'un agent émulsionnant à l'aide d'un peroxydisulfate comme initiateur et d'un régulateur de chaînes ajouté dans la charge initiale de monomère. Le brevet **EP 655468** décrit la polymérisation du VF2 en présence d'un initiateur radicalaire et d'un alcane chlorofluoré (HCFC 123) comme agent de transfert. Le HCFC 123 est ajouté soit en totalité au début de la polymérisation soit par fractions au cours de la polymérisation et il est très clair d'après l'exemple 1 qu'une fraction est ajoutée avant la polymérisation. Le brevet **EP 169328** décrit la polymérisation du VF2 en présence d'un surfactant, d'un initiateur et de trichlorofluorométhane et d'alcool isopropylique, ces deux derniers étant des agents de transfert. L'initiateur est toujours ajouté après une partie ou la totalité des agents de transfert. Le brevet **FR 2259114** décrit la polymérisation du VF2 en présence d'un initiateur radicalaire et d'un agent de transfert de chaînes dans lequel l'initiateur et l'agent de transfert sont ajoutés graduellement dans le réacteur de polymérisation en même temps qu'on ajoute le VF2 par petites proportions dans le réacteur.

On a résolu aussi un autre problème technique. Le PVDF présente parfois une morphologie cristalline trop grossière , c'est à dire constituée d'entités cristallines (appelées sphérulites) de taille moyenne trop élevée ou de distribution en taille trop large. Parmi les conséquences négatives d'une telle morphologie, on peut distinguer par exemple une forte microrugosité des objets obtenus par mise en oeuvre à partir de l'état fondu, un défaut de brillance ou un mauvais état de surface, ainsi une plus faible transparence du matériau final. De plus, une altération la tenue mécanique lors de contacts prolongés avec des substances chimiques corrosives peut également résulter d'une morphologie cristalline superficielle manquant de finesse. L'art antérieur a décrit des moyens pour réduire la taille moyenne des sphérulites, généralement on introduit dans la matrice fluorée des agents de nucléation.

La demande de brevet japonais **JP-48-34956** enseigne le procédé de préparation d'un composé à base de PVDF, consistant à mélanger aux particules ou au latex de PVDF, de 0,05 % à 30 % de latex de résine fluorée dont la température de fusion est supérieure à celle du PVDF. Une telle résine fluorée peut être le poly(fluorure de vinyle), le polytétrafluorure d'éthylène (PTFE), le polytrifluorure de chlorure d'éthylène, ou encore des résines choisies parmi les homopolymères et les copolymères de fluorure de vinyle (VF), de trifluorure de chlorure d'éthylène (CTFE), de difluorure de vinylidène (VF₂) et de difluorure de dichlorure d'éthylène (VF₂Cl₂), résines dont le point de fusion est plus élevé que celui du PVDF. On ajoute normalement de 0,05 à 30 % en poids par rapport au PVDF de latex de ces résines fluorées dont les particules ont de 0,05 à 1 µm de diamètre. Dans l'exemple 8, du PVDF mélangé à des particules de PTFE de 0,05 µm donne après fusion du PVDF à 250°C une plaque de 1 mm d'épaisseur comportant des sphérolites d'une taille inférieure à 1 µm.

Les brevets **DE 2116847** et **FR 2721036** décrivent l'addition de composés moléculaires aromatiques ou hétérocycliques.

L'efficacité de certains agents de nucléation est bien démontrée, mais leur incorporation dans une matrice de polyfluorure de vinylidène est toujours une étape délicate. En effet, les concentrations requises sont très faibles, typiquement de l'ordre de 0,1% en poids, ce qui rend difficile l'obtention d'une dispersion homogène.

On a maintenant découvert un PVDF qui présente des tailles moyennes de sphérulites de l'ordre du µm, c'est le PVDF à fraction de chaînes non transférées de l'invention qu'on a cité plus haut. Il est fabriqué sans addition d'agents de nucléation.

### [brève description de l'invention]

L'invention est un PVDF (polyfluorure de vinylidène) homopolymère ou copolymère, le comonomère étant choisi parmi les composés contenant un groupe vinyle capable de s'ouvrir par l'actions de radicaux libres pour se polymériser et qui contient, directement attaché à ce groupe vinyle, au moins un atome de fluor, un groupe fluoroalkyle ou un groupe fluoroalkoxy tel que:
- il comprend une fraction de chaînes non transférées de très haute masse molaire totalement insolubles dans les solvants usuels du PVDF tels que la DMF (diméthylformamide), le DMSO (diméthylsulfoxyde), et la NMP (N-méthylpyrolydone), la fraction de polymère associée à ces chaînes de haute masse présentant une viscosité dynamique supérieure à 50 kPoise à 230°C sous une vitesse de cisaillement de 100 s-1.
- la taille des sphérulites est comprise entre 0,5 et 4 µm.

L'invention concerne aussi des mélanges de ce PVDF et d'un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et tel que :
- le bloc A est compatible avec le PVDF,
- le bloc B est incompatible avec le PVDF et est incompatible avec le bloc A,
- le bloc C est incompatible avec le PVDF, le bloc A et le bloc B.

L'invention concerne aussi les pièces constituées de la composition ci-dessus. Ces pièces peuvent être des plaques, des films, des tubes, des joncs, des éléments de pompes centrifuges et des conteneurs.

L'invention concerne aussi un procédé de synthèse de ce PVDF dans lequel :
- on réalise une dispersion de VF2 (fluorure de vinylidène) et du ou des éventuels comonomères dans l'eau, éventuellement à l'aide d'un tensioactif, la dite dispersion étant initialement mise en contact avec un amorceur non organique soluble dans l'eau capable de provoquer la polymérisation des monomères,
- puis, une partie du PVDF ayant été formée en présence de l'amorceur non organique soluble dans l'eau, on ajoute:
   soit (i) un agent de transfert de chaînes capable de propager la polymérisation, la dite polymérisation est alors initiée par un amorceur non organique soluble dans l'eau ou par un amorceur organique,
   soit (ii) un amorceur organique capable d'effectuer aussi du transfert de chaînes et éventuellement un amorceur non organique soluble dans l'eau.

Le principe de ce procédé est basé sur la formation, en début de polymérisation, d'une fraction de chaînes macromoléculaires de très haute masse molaire, produite sans agent de transfert (ou sans réaction secondaire de type transfert ou terminaison contribuant à limiter fortement la longueur de chaîne) et sans amorceur capable d'induire une réaction de transfert. La réaction démarre donc sans agent de transfert (CTA), et la première charge de CTA est injectée à un taux de conversion des monomères par exemple de l'ordre de 5% en poids. La dose nécessaire de CTA peut alors être introduite par incrément ou en continu, la quantité totale permettant d'ajuster la masse molaire moyenne du polymère. Dans le cas d'une seule injection d'agent de transfert, le produit obtenu va montrer une distribution bimodale des masses molaires avec une première population de très haute masse et une seconde population de masse limitée. L'étape de polymérisation après addition de la première dose d'agent de transfert peut également ètre conduite sous l'effet d'un amorceur organique dont la contribution aux réactions de transfert sera plus ou moins importante.

Dans le cas particulier d'un amorceur organique possédant un effet transfert suffisant pour ajuster la masse molaire, il est également possible de s'affranchir de l'agent de transfert proprement dit sans changer la nature de l'invention. Dans ce cas, la FCNT est encore obtenue lors de la première étape de polymérisation en présence de l'amorceur non-organique, et une seconde fraction de masse molaire modérée est formée sous la seule action de l'amorceur organique.

L'invention permet d'améliorer les propriétés de résistance à l'impact, ainsi que la finesse de la morphologie du PVDF en modifiant uniquement les conditions de synthèse, et plus précisément, en optimisant le mode d'introduction de l'agent de transfert en cours de polymérisation et en utilisant initialement un amorceur non organique soluble dans l'eau. Cette évolution de procédé s'effectue sans aucun changement de l'appareillage de fabrication du polymère, et peut être ainsi très rapidement transposée sur une ligne de production industrielle.

### [Description détaillée de l'invention]

**A titre d'exemple de comonomère** on peut citer le fluorure de vinyle; le trifluoroethylene; le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro(1,3-dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH2OCF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene. On peut utiliser plusieurs comonomères.

Avantageusement le PVDF est choisi parmi les homo- et copolymères du fluorure de vinylidène (VF2) contenant de préférence au moins 50% en poids de VF2, le copolymère étant choisi parmi le chlorotrifluoroéthylène (CTFE), l'hexafluoropropylène (HFP), le trifluoroéthylène (VF3) et le tétrafluoroéthylène (TFE).

**S'agissant de la proportion des chaînes non transférées (de très haute masse)** elle peut représenter jusqu'à 50% en poids du PVDF et elle est avantageusement comprise entre 2 et 30 % en poids. Il s'agit de la proportion par rapport à la quantité totale de PVDF, c'est à dire que pour 2 à 30 % de chaînes de très haute masse il y a respectivement 98 à 70 % d'autres chaînes. La proportion est de préférence entre 5 et 30 % et mieux entre 15 et 25 %. L'insolubilité des chaînes de très haute masse dans les solvants usuels du PVDF est constatée selon les règles de l'art.

**S'agissant de la taille des sphérulites** elle est avantageusement comprise entre 0,8 et 2 µm. Typiquement pour un PVDF standard préparé à 80°C par un procédé en émulsion en présence d'un tensioactif, d'un initiateur et d'un agent de transfert la taille moyenne est comprise entre 2 et 10 microns. C'est ce qu'on observe sur le Kynar^{®} 740 et le Kynar^{®} 1000 qui sont aussi des PVDF homopolymères alors que pour un PVDF selon la présente invention contenant 25% en poids de chaînes de très haute masse la taille moyenne est de l'ordre de 1 µm. Le Kynar^{®} 740 et le Kynar^{®} 1000 sont décrits dans les exemples comparatifs de la présente invention.

Avantageusement le MFI (abréviation de Melt Flow Index ou indice de fluidité à l'état fondu) est compris entre 1 et 50 (en g/10 min à 230°C - 5 kg). De préférence le MFI du PVDF de l'invention est soit compris entre 1 et 3 et de préférence entre 1,5 et 2,5 soit compris entre 10 et 50 et de préférence entre 15 et 40.

Les PVDF de l'invention présentent une très bonne résistance au choc. De plus ils présentent un caractère fortement pseudoplastique (forte chute de la viscosité avec la vitesse de cisaillement), ce qui constitue généralement un avantage du point de vue de la mise en oeuvre à l'état fondu et un plateau newtonien repoussé vers les basses vitesses de cisaillement, ce qui est utile, par exemple, pour l'extrusion soufflage de films fins.

**S'agissant du copolymère tribloc ABC** Le copolymère à blocs comportant au moins trois blocs A, B et C est tel que le bloc A est relié au bloc B et le bloc B au bloc C au moyen d'une ou plusieurs liaisons simples covalentes. Dans le cas de plusieurs liaisons covalentes, entre le bloc A et le bloc B et/ou entre le bloc B et le bloc C, il peut y avoir un seul motif ou un enchaînement de motifs servant à joindre les blocs entre eux. Dans le cas d'un seul motif, ce dernier peut provenir d'un monomère dit modérateur utilisé dans la synthèse du tribloc. Dans le cas d'un enchaînement de motifs, celui-ci peut être un oligomère résultant d'un enchaînement d'unités monomères d'au moins deux monomères différents dans un ordre alterné ou aléatoire. Un tel oligomère peut relier le bloc A au bloc B et le même oligomère ou un oligomère différent peut relier le bloc B au bloc C.

le bloc A d'un copolymère ABC est considéré comme compatible avec le PVDF si le polymère A identique à ce bloc (donc sans séquences B et C) est compatible avec cette résine à l'état fondu. De même, les blocs A et B sont considérés comme incompatibles si les polymères A et B identiques à ces blocs sont incompatibles. D'une manière générale, par compatibilité entre deux polymères, on entend l'aptitude de l'un à se dissoudre dans l'autre à l'état fondu ou bien leur miscibilité totale. Dans le cas contraire les polymères ou blocs sont dits incompatibles.

Plus l'enthalpie de mélange de deux polymères est faible, plus grande est leur compatibilité. Dans certains cas, il y a une interaction spécifique favorable entre les monomères qui se traduit par une enthalpie de mélange négative pour les polymères correspondants. Dans le cadre de la présente invention, on préfère mettre en oeuvre des polymères compatibles dont l'enthalpie de mélange est négative ou nulle.

L'enthalpie de mélange ne peut cependant pas être mesurée de manière classique pour tous les polymères, et donc la compatibilité ne peut qu'être déterminée de manière indirecte, par exemple par des mesures d'analyse viscoélastique en torsion ou en oscillation ou encore par analyse calorimétrique différentielle. Pour des polymères compatibles, on peut détecter 2 Tg pour le mélange : l'une au moins des deux Tg est différente des Tg des composés purs et se situe dans la plage de températures comprise entre les deux Tg des composés purs. Le mélange de deux polymères totalement miscibles présente une seule Tg.

D'autres méthodes expérimentales peuvent être utilisées pour mettre en évidence la compatibilité des polymères, telles que mesures de turbidité, mesures de diffusion de la lumière, mesures infrarouge (L. A Utracki, Polymer Alloys and Blends, pp 64-117).

Des polymères miscibles ou compatibles sont répertoriés dans la littérature, voir par exemple J. Brandrup and E.H. Immergut : Polymer Handbook, 3rd Edition, Wiley & Sons 1979, New York 1989, pp. Vl/348 à Vl/364 ; O. Olabisi, L. M. Robeson and M. T. Shaw : Polymer Miscibility, Academic Press, New York 1979, pp. 215-276 ; L.A. Utracki : Polymer Alloys and Blends, Hanser Verlag, Münich 1989. Les listes figurant dans ces références sont données à titre illustratif et ne sont, bien entendu, pas exhaustives.

Avantageusement le bloc A est choisi parmi les homo- et copolymères d'(alkyl)acrylate d'alkyle et par exemple de méthacrylate de méthyle (MAM) et/ou d'acrylate de méthyle ou d'éthyle et/ou celles dérivant d'acétate de vinyle. Avantageusement, le bloc A est du Poly(méthacrylate de méthyle) (PMMA). De préférence, ce PMMA est syndiotactique et sa température de transition vitreuse Tg_{(A)}, mesurée par analyse thermique différentielle, est de +120°C à +140°C.

Avantageusement la Tg de B est inférieure à 0°C et de préférence inférieure à - 40°C.

Le monomère utilisé pour synthétiser le bloc B élastomérique peut être un diène choisi parmi le butadiène, l'isoprène, le 2,3-diméthyl-1,3-butadiène, le 1,3-pentadiène, le 2-phényl-1,3-butadiène. B est choisi avantageusement parmi les poly(diènes) notamment poly(butadiène), poly(isoprène) et leurs copolymères statistiques, ou encore parmi les poly(diènes) partiellement ou totalement hydrogénés. Parmi les polybutadiènes on utilise avantageusement ceux dont la Tg est la plus faible, par exemple le polybutadiène-1,4 de Tg (vers -90° C) inférieure à celle du polybutadiène-1,2. (vers 0° C). Les blocs B peuvent aussi être hydrogènés. On effectue cette hydrogénation selon les techniques habituelles.

Le monomère utilisé pour synthétiser le bloc B élastomérique peut être aussi un (meth)acrylate d'alkyle, on obtient les Tg suivantes entre parenthèses suivant le nom de l'acrylate: l'acrylate d'éthyle (-24°C), l'acrylate de butyle, (-54°C), l'acrylate de 2-éthylhexyle (-85°C), l'acrylate d'hydroxyéthyle (-15°C) et le méthacrylate de 2-éthylhexyle (-10°C). On utilise avantageusement l'acrylate de butyle. Les acrylates sont différents de ceux du bloc A pour respecter la condition de B et A incompatibles.

De préférence les blocs B sont constitués en majorité de polybutadiène-1,4.

De préférence, le bloc C a une température de transition vitreuse Tg(c) ou une température de fusion Tf_{(C)} supérieure à la Tg_{(B)} du bloc B. Cette caractéristique confère la possibilité que le bloc C soit à l'état vitreux ou soit dans un état partiellement cristallin et le bloc B à l'état élastomérique, pour une même température d'utilisation Tp.

D'après la présente invention, il est possible de choisir la nature des blocs B pour avoir une certaine Tg_{(B)} déterminée et ainsi, à la température d'utilisation Tp du matériau ou de l'objet formé à partir du mélange, d'avoir un état élastomérique ou souple de ces polymères blocs B. Par contre, les polymères blocs C pouvant avoir une Tg_{(C)} ou une Tf supérieure à la Tg_{(B)}, ils peuvent être dans un état vitreux relativement rigide à la même température d'utilisation.

Comme les blocs C sont incompatibles avec le PVDF, les blocs A et les blocs B, ils forment une phase discrète rigide à l'intérieur du matériau en formant des nanodomaines inclus dans le matériau et servant d'ancrages dans la zone d'une des extrémités de chaque bloc B. L'autre extrémité de chaque bloc B est relié à un bloc A qui possède une forte affinité avec le PVDF. Cette forte affinité procure un second ancrage dans la zone de la seconde extrémité du bloc B.

Avantageusement, le bloc C est choisi parmi les homopolymères ou les copolymères du styrène ou de l'α-méthylstyrène.

Les triblocs qui contiennent des séquences dérivant d'(alkyl)acrylate d'alkyle peuvent notamment être préparés par polymérisation anionique par exemple selon les procédés décrits dans les demandes de brevet EP 524.054 et EP 749.987.

De préférence, le tribloc ABC est du Poly (méthyle méthacrylate-*b-*butadiène-*b*-styrène).

Le copolymère tribloc ABC peut contenir, comme produits secondaires de sa synthèse, un copolymère dibloc B-C et éventuellement de l'homopolymère C. Le copolymère tribloc ABC peut aussi contenir, comme produits secondaires de sa synthèse, un copolymère dibloc A-B et éventuellement de l'homopolymère A.

En effet, la synthèse d'un copolymère tribloc se fait préférentiellement en réunissant successivement le bloc A au bloc B puis au bloc C ou inversement le bloc C au bloc B puis au bloc A suivant la nature des trois blocs A, B et C. Le bloc A étant par définition celui qui est compatible avec le PVDF. Le copolymère tribloc ABC peut aussi contenir des copolymères blocs linéaires symétriques ou en étoiles du type ABA ou CBC.

Avantageusement la quantité totale en poids des produits secondaires de synthèse c'est à dire de ces homopolymères A, C ou copolymères blocs AB, BC, ABA et CBC est inférieure à 2 fois la quantité de tribloc ABC. De préférence cette quantité est inférieure à une fois et mieux encore 0,5 fois la quantité de tribloc ABC. Plus précisément les produits secondaires sont essentiellement le dibloc BC, la quantité de BC peut être comprise entre 25 et 35 parties en poids pour respectivement 75 à 65 parties de ABC et est avantageusement d'environ 30 parties pour 70 parties de ABC.

La masse moléculaire moyenne en nombre (Mₙ) du copolymère tribloc, y compris les produits secondaires de synthèse, est supérieure ou égale à 20000 g.mol⁻¹, et de préférence comprise entre 50000 et 200000 g.mol⁻¹. Avantageusement le copolymère tribloc ABC, y compris les produits secondaires, est constitué de :
- 20 à 93 et de préférence de 30 à 70 parties en poids de séquences A,
- 5 à 68 et de préférence de 10 à 40 parties en poids de séquences B,
- 2 à 65 et de préférence de 5 à 40 parties en poids de séquences C.

La proportion de tribloc ABC dans le PVDF peut être jusqu'à 30 % en poids pour 70% de PVDF. Avantageusement les proportions de tribloc sont de 2 à 30 % pour respectivement 98 à 70% de PVDF et de préférence 5 à 15 % pour respectivement 95 à 85% de PVDF.

On ne sortirait pas du cadre de l'invention en ajoutant à ces PVDF, contenant ou non des triblocs ABC, des stabilisants, des ignifugeants, des plastifiants et des modifiants choc.

**S'agissant du procédé de synthèse de ce PVDF** un aspect fondamental de ce procédé est qu'il repose sur l'utilisation de systèmes amorceurs (radicalaires) sans contribution notable aux réactions de transfert (ou de terminaison), soit par leur structure chimique propre, soit par la structure chimique de leurs produits de décomposition. En effet, durant la période de réaction sans CTA, une intervention minimale des réactions de transfert ou de terminaison doit être assurée. La présente invention s'applique donc particulièrement bien aux procédés de polymérisation en émulsion car ils permettent de réaliser l'amorçage avec des composés non-organiques hydrosolubles, tels que par exemple les persulfates ou le peroxyde d'hydrogène, qui n'ont pas d'effet transfert secondaire. En revanche la majorité des amorceurs organiques utilisables pour les procédés en émulsion et/ou en suspension, ne conviennent pas parce qu'ils interviennent dans les réactions de transfert ou de terminaison (en raison des hydrogènes labiles présents dans la partie hydrocarbonée de leur squelette). A titre d'exemple de ces amorceurs ayant des hydrogènes labiles dans leur partie hydrocarbonée on peut citer le peroxyde de ditertiobutyle. Il faut évidemment considérer que c'est uniquement la fraction de chaîne initiale de très haute masse molaire qui doit être produite sous l'influence d'un amorceur sans contribution aux réactions de transfert (ou de terminaison). Pour les fractions ultérieures formées en présence d'agent de transfert, le même amorceur ou un amorceur de type organique peuvent être employés sans limitation. Les chaînes de très haute masse ayant été formées on ajoute le CTA. On ne sortirait pas du cadre de l'invention en utilisant un initiateur qui contribue aussi au transfert tel que par exemple un initiateur de type organique. On ne sortirait pas du cadre de l'invention en rajoutant ensuite une autre quantité d'initiateur en une ou plusieurs fois, le même ou un initiateur contribuant au transfert, éventuellement une autre quantité des monomères en une ou plusieurs fois et toute combinaison de ces possibilités.

Le taux de conversion du VF2 et du ou des éventuels comonomères avant la première injection de CTA détermine la fraction de chaîne formée sans agent de transfert. Puis les chaînes de très haute masse ayant été formées le nombre d'injections ou le débit d'introduction du CTA détermine la distribution des masses molaires de la fraction du PVDF qui n'est pas de très haute masse. Le volume total de CTA n'est pas un paramètre critique. Il doit être ajusté de manière à fixer la masse molaire moyenne du polymère qui est associé à la viscosité à l'état fondu. Le volume d'eau dans lequel on réalise la dispersion des monomères, les quantités de tensioactif, d'initiateur et de CTA sont determinables facilement par l'homme de métier. On effectue la polymérisation dans un réacteur agité puis on sépare par tout moyen le PVDF (il est sous forme de particules solides) et l'eau. Ces techniques sont connues en elles mêmes et sont décrites dans les brevets US 4025709, US 4569978, US 4360652, EP 626396 et EP 0655468.

Avantageusement, l'émulsion aqueuse est polymérisée à une température de 50 à 130°C.

De préférence, la polymérisation est réalisée à une pression absolue de 40 à 120 bars

**S'agissant du tensioactif** on désigne ainsi tout produit capable de disperser les monomères dans l'eau afin de faciliter leur polymérisation. Les brevets US 4025709, US 4569978, US 4360652, EP 626396 et EP 0655468 décrivent les procédés de synthèse du PVDF par mise en émulsion aqueuse du VF₂ et sa polymérisation, on y trouve de nombreuses formules de tensioactifs.

A titre d'exemple on peut citer ceux de formule générale : ZCₙF₂ₙCOOM dans laquelle Z est un atome de fluor ou de chlore, n est un nombre entier valant 6 à 13 et M est un atome d'hydrogène ou de métal alcalin ou un groupe ammonium ou un groupe ammonium comportant au moins un substituant alkyle inférieur.

On peut encore citer les perfluoroalkanoates de lithium de formule F₃C(CF₂)ₙ₋₂CO₂Li où n = 7, 8, 9 et 10.

La quantité de tensioactif introduite au départ ou en cours de polymérisation, peut être comprise entre 0.01 et 5 parties pour 100 parties d'eau présentes dans la charge initiale du réacteur

**S'agissant de l'amorceur non organique soluble dans l'eau capable de provoquer la polymérisation des monomères,** on peut citer essentiellement les peroxydes inorganiques, par exemple sous forme de sels, tels que le persulfate de potassium, de sodium ou de potassium. . La quantité d'initiateur peut être comprise entre 0.002 et 0.2 parties pour 100 parties de monomères consommés dans la réaction. Différents coréactifs bien connus par l'homme du métier peuvent ètre également ajoutés à ces peroxydes inorganiques pour augmenter leur vitesse de décomposition ou abaisser leur température d'utilisation.

S'agissant de l'amorceur organique éventuellement employé pour poursuivre la réaction, on peut citer essentiellement les peroxydes hydrocarbonés, tel que le di-tertiobutylperoxyde, le di-cumylperoxyde ou le peroxyde de benzoyle, les percarbonates de dialkyle, tel que le diethyl ou di-so-propylpercarbonate, les peracides ou peresters, tel que le perpivalate de t-butyle ; le perpivalate de t-amyle ou le peroxybenzoate de t-butyle.

**S'agissant de l'agent de transfert,** on désigne ainsi tout produit qui permet de limiter la masse molaire du polymère tout en propageant la réaction de polymérisation. A titre d'exemple on peut citer l'acétone, l'isopropanol, l'acétate de méthyle, l'acétate d'éthyle, le diethylether, l'acétate de n-butyle, le malonate de diéthyle et le carbonate de diéthyle et différent composés chlorofluorocarbonés. La quantité d'agent de transfert dépend essentiellement de sa nature et de la masse molaire moyenne désirée pour la fraction de polymère obtenue en sa présence, laquelle conditionne la viscosité moyenne du produit final. De préférence, l'agent de transfert mis en oeuvre représente de 0,01 à 5 parties pour 100 parties de monomères consommés dans la réaction.

### [Exemples]

### Exemple 1:

Dans un autoclave de 30 I on introduit 18,6 l d'eau déionisée et 50 g de tensioactif anionique perfluoré de type C₈F₁₇CO₂NH₄.

L'autoclave est fermé et mis sous agitation mécanique intermittente, puis il est dégazé sous vide, rempli à l'azote jusqu'à 10 bars de pression, à nouveau dégazé sous vide, rempli au VF₂ jusqu'à 5 bars de pression, et enfin dégazé sous vide une dernière fois. L'autoclave est ensuite amené à 85°C en portant l'agitation mécanique à 150 tours/min, puis rempli de VF₂ jusqu'à une pression absolue de 85 bars.

Une dose de 50 ml de solution aqueuse à 0,5 % en poids de persulfate de potassium est ajoutée en une seule fois pour démarrer la réaction. La pression est maintenue à 85 bars par introduction continue de VF₂.

Lorsque 2,25 kg de VF₂ ont été consommés, 250 ml d'acétate d'éthyle (AE) et 70 ml de la même solution aqueuse de persulfate de potassium sont ajoutés.

Lorsque 9 kg de VF2 ont été consommés, 20 ml de solution aqueuse de persulfate sont incorporés pour maintenir une vitesse de conversion dans l'intervalle de 1,5 à 3,5 kg/heure.

Lorsque 9 kg de VF2 ont été consommés, l'alimentation en VF2 est arrêtée et la réaction est poursuivie jusqu'à 42 bars de pression, avant d'abaisser la température à 23°C et de vider l'autoclave du monomère résiduel.

Cet essai permet de produire 31,2 kg de latex à 39,5 % d'extrait sec, soit 12,3 kg de PVDF sec. La fraction de polymère obtenue avant introduction de l'agent de transfert est de 2.9 kg, soit 23,6% de la totalité du produit formé. L'indice de fluidité mesuré suivant la norme ISO 1133 à 230°C sous une charge de 5 kg est 1,7 g/10 min.

### Exemple 2

On opère comme dans l'exemple 1, excepté l'introduction supplémentaire de 200 ml d'AE lorsque 9 kg de VF2 sont consommés.

### Exemple 3 Coplymère VF2-HFP

On opère comme dans l'exemple 1, excepté l'introduction de 105 g d'hexafluoropropylène (HFP) après le dégazage initial et avant la mise sous pression à 85 bars ainsi que l'alimentation avec un mélange VF2/HFP contenant 1 % en poids de CTFE jusqu'à 2,25 kg de mélange consommé. Après introduction de l'AE au terme de l'ajout du mélange VF2/HFP, la réaction est poursuivie avec le VF2 seul.

### Exemple 4

On opère comme dans l'exemple 1, excepté l'introduction de 480 ml d'AE lorsque 2.25 kg de VF2 sont consommés.

### Exemple 5

On opère comme dans l'exemple 1 , excepté l'introduction de 150 ml d'AE à 1,2 kg de VF2 consommé, puis de 250 ml d'AE à 2.25 kg de VF2 consommés.

### Exemple 6 Copolymère VF2-CTFE

On opère comme dans l'exemple 1, excepté l'introduction de 50g de chlorotrifluoroéthylène (CTFE) après le dégazage initial et avant mise en pression à 85 bars, ainsi que l'alimentation avec un mélangeVF2/CTFE contenant 2% en poids de CTFE jusqu'à 2,25 kg de consommation du mélange. Après introduction de l'AE au terme de l'ajout du mélange VF2/CTFE, la réaction est poursuivie avec le VF2 seul.

### Exemple 7

On opère comme dans l'exemple 1, excepté que la réaction est conduite à une pression absolue de 45 bars, laquelle pression est toujours maintenue constante par alimentation continue en VF2. La quantité d'eau déionisée initialement chargée dans l'autoclave est aussi ramenée à 17,6 litres. De plus, au lieu d'introduire initialement une dose 50 ml d'une solution aqueuse à 0.5% de persulfate, c'est une dose de 80 ml de la même solution qui est ajoutée. Enfin, lorsque 1.7 kg de VF2 sont consommés, un volume de 60 ml d'AE est injecté et la réaction est poursuivie par alimentation de l'autoclave avec une émulsion aqueuse contenant 2 % en poids de n-propyl percarbonate (n-PP) à raison de 300 ml/heure. L'alimentation en VF2 est arrêtée lorsque 7.1 kg de VF2 sont consommés et l'addition de l'émulsion de n-PP est maintenue jusqu'à 10 bars, avant d'abaisser la température à 23°C et de vider l'autoclave du monomère résiduel.

Le tribloc ABC est un tribloc PMMA-PB-PS (PMMA-polybutadiène-polystyrène) de caractéristiques suivantes: la masse moléculaire en nombre (Mn) des séquences PMMA est de 65700 g.mol-1, la Mn des séquences PB est 22800 et celle des blocs PS est de 25000. Le tribloc ABC est en fait un mélange de 60% en poids d'un pur tribloc ABC et de 40% d'un pur dibloc BC qui est un intermédiaire de synthèse, le dibloc BC a un bloc PS de Mn 25000 et un bloc PB de Mn 22800.

Le bloc PMMA représente 58% en fraction massique de la masse totale du tribloc (cad de la somme du pur tribloc et du pur dibloc), le bloc PB représente 20% en fraction massique de la masse totale du tribloc (cad de la somme du pur tribloc et du pur dibloc), et le bloc PS représente les 22% restants (cad de la somme du pur tribloc et du pur dibloc). Il est préparé selon le mode opératoire décrit dans EP 524.054 ou dans EP 749.987.

Les propriétés des PVDF sont reportées dans les tableaux 1-3 . Ces tableaux décrivent les propriétés mécaniques et rhéologiques de PVDF (ou copolymères à très faible taux d'HFP ou CTFE). La comparaison des données doit être faite avec des produits industriels présentant un niveau comparable d'indice de fluidité.

Tout d'abord, pour ce qui concerne les polymères adaptés à un usage en extrusion (MFI #2) c'est à dire les ex 1-3, 6-7 on constate que l'énergie de fracture à l'ambiante peut être pratiquement doublée par rapport au Kynar^{®}1000 et quadruplée par rapport au Kynar^{®} 740.

A -30°C, l'influence est moins forte, bien que l'on puisse observer un accroissement de 50% environ de l'énergie de fracture. En examinant les propriétés de traction, on constate également un gain significatif en terme de contrainte au seuil pour les ex 2-3 (+8%), ce qui va dans le sens d'une plus grande résistance du matériau a la déformation plastique.

Dans le cas des polymères ciblés pour l'injection ou la co-extrusion (MFI #15-20), l'effet sur l'énergie de fracture est plus important à -30°C, qu'à température ambiante, comme le démontre les valeurs obtenues pour les ex 4-5 par rapport aux grades commerciaux Kynar^{®} 720 et 6000.

A partir des données obtenues pour les mêmes produits formulés avec 10% de tribloc ABC on constate sur le tableau 3 que l'amélioration de la tenue au choc résultant de l'additif est décuplée à température ambiante en présence de la FCNT.

Enfin, deux clichés obtenus au microscope optique sous lumière polarisée à partir de coupe microtome sur échantillons injectés permettent de comparer la morphologie cristalline du kynar 740 et du produit de l'exemple 1. Une diminution de la taille moyenne des sphérulites est observée pour le PVDF contenant la FCNT.

**Tableau 1**

| exemples | MFI | Choc Charpy | | Traction | | | | Rhéologie | | | |
|---|---|---|---|---|---|---|---|---|---|---|---|
| | 230°C/5kg | -30°C | 23°C | Contr.seuil | All.seuil | Contr. rupt | All.rupt | (Pa-s) | | | Observations |
| | g/10min | (kJ/m²) | (kJ/m²) | (Mpa) | (%) | (Mpa) | (%) | 10 s-1 | 100 s-1 | 1000 s-1 | |
| Kynar^{®} 1000 PVDF homopolymère | 2 | 7,2 | 22,8 | 48,0 | 10,2 | 23,4 | 118 | 6625 | 1791 | 409 | |
| Kynar^{®} 740 PVDF homopolymère | 2 | 6,6 | 12,0 | 49,9 | 9,4 | 27,5 | 192 | 6741 | 1698 | 394 | |
| ex 1 | 1,7 | 10,1 | 40,3 | 45,9 | 11,0 | 29,9 | 183 | 9092 | 2313 | 478 | # 24% de chaine non transférée (chaînes de très haute masse) |
| ex 2 | 2,4 | 9,6 | 35,6 | 53,3 | 10,1 | 35,8 | 134 | 8077 | 2110 | 455 | + 200 ml d'AE à 9 Kg de VF2 consommés |
| ex 3 | 2 | 8,9 | 33,8 | 54,0 | 11,3 | 34,6 | 153 | 7996 | 2129 | 456 | + HFP |
| | | | | | | | | | | | |
| ex6 | 1,8 | 9,5 | 41,8 | 43,8 | 10,6 | 35 | 255 | 13178 | 3388 | 714 | + CTFE |
| | | | | | | | | | | | |
| ex7 | 1,6 | 7,1 | 16,4 | 50,6 | 11 | 35,2 | | 222 6882 | 1662 | 351 | + n-PP à partir de 1,7 kg deVF2 consommés |

**Tableau 2**

| exemples | MFI | Choc Charpy | | Traction | | | | Rhéologie | | | Observations |
|---|---|---|---|---|---|---|---|---|---|---|---|
| | 230°C/5kg | -30°C | 23°C | Contr.seuil | Ail.seuil | Contr.rupt | All.rupt | (Pa-s) | | | |
| | (g/10mn) | (kJ/m²) | (kJ/m²) | (Mpa) | (%) | (Mpa) | (%) | 10 s-1 | 100 s-1 | 1000 s-1 | |
| Kynar^{®} 720 PVDF homopolymère | 19 | 3,9 | 7,3 | 53,3 | 10,6 | 25,6 | 103 | 2422 | 908 | 248 | |
| Kynar^{®} 6000 PVDF homopolymère | 18 | 3,9 | 8,5 | 51,1 | 9,9 | 31,4 | 40 | 2540 | 916 | 272 | |
| ex 4 | 20,8 | 6,7 | 10,7 | 52,4 | 9,7 | 52,4 | 27 | 2369 | 891 | 260 | # 24% de chaine non transférée |
| ex 5 | 16 | 9,1 | 11,9 | 46,7 | 11,8 | 32,0 | 67 | 2839 | 1023 | 291 | # 13% de chaine non transférée + 250 ml d'AE à 2,25 kg de VF2 consommés |

**Tableau 3**

| exemples | MFI | Choc Charpy | | Traction | | | | Rhéologie | | | Observations |
|---|---|---|---|---|---|---|---|---|---|---|---|
| | 23°C/5kg | -30°C | 23°C | Contr.seuil | All.seuil | Contr.rupt | All.rupt | (Pa-s) | | | |
| | (g/10mn) | (kJ/m²) | (kJ/m²) | (Mpa) | (%) | (Mpa) | (%) | 10 s-1 | 100 s-1 | 1000 s-1 | |
| Kynar^{®}720 + 10%SBM | | 9,2 | 15,8 | 41,2 | 8,2 | 23,2 | 24 | | | | |
| ex 4+ 10%SBM | | 9,0 | 41,0 | 43,8 | 7,1 | 20,5 | 39 | | | | |
| ex 5+ 10%SBM | | 10,2 | 38,6 | 45,3 | 8,2 | 29,5 | 95 | | | | |

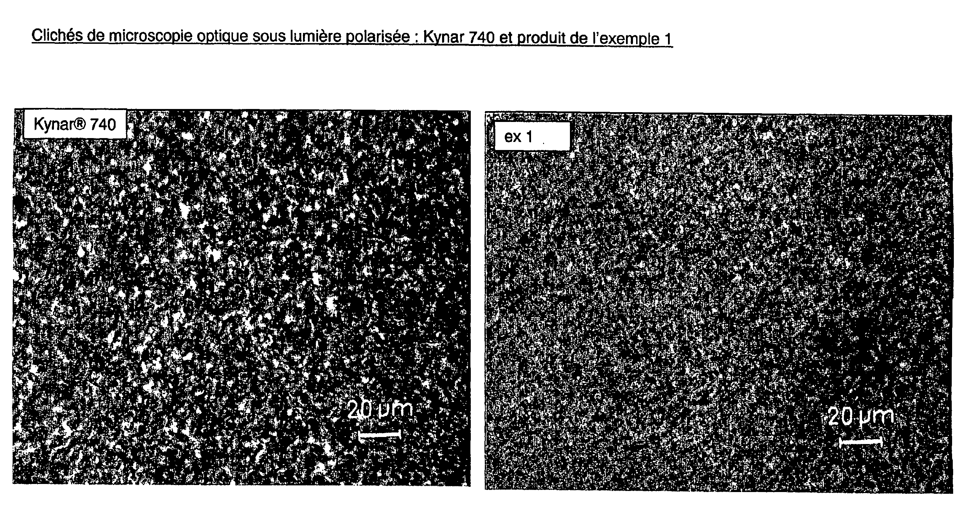

## Revendications

1. PVDF (polyfluorure de vinylidène) homopolymère ou copolymère, le comonomère étant choisi parmi les composés contenant un groupe vinyle capable de s'ouvrir par l'actions de radicaux libres pour se polymériser et qui contient, directement attaché à ce groupe vinyle, au moins un atome de fluor, un groupe fluoroalkyle ou un groupe fluoroalkoxy tel que:
• il comprend une fraction de chaînes non transférées de très haute masse molaire totalement insolubles dans les solvants usuels du PVDF tels que la DMF (diméthylformamide), le DMSO (diméthylsulfoxyde), et la NMP (N-méthylpyrolydone), la fraction de polymère associée à ces chaînes de haute masse présentant une viscosité dynamique supérieure à 50 kPoise à 230°C sous une vitesse de cisaillement de 100 s-1.
• la taille des sphérulites est comprise entre 0,5 et 4 µm.

2. PVDF selon la revendication 1 choisi parmi les homo- et copolymères du fluorure de vinylidène (VF2) contenant de préférence au moins 50% en poids de VF2, le comonomère étant choisi parmi le chlorotrifluoroéthylène (CTFE), l'hexafluoropropylène (HFP), le trifluoroéthylène (VF3) et le tétrafluoroéthylène (TFE).

3. PVDF selon l'une quelconque des revendications précédentes dans lequel la proportion de chaînes non transférées de très haute masse est comprise entre 2 et 30% en poids.

4. PVDF selon la revendication 3 dans lequel la proportion de chaînes non transférées de très haute masse est comprise entre 5 et 30% en poids.

5. PVDF selon la revendication 4 dans lequel la proportion de chaînes non transférées de très haute masse est comprise entre 15 et 25% en poids.

6. PVDF selon l'une quelconque des revendications précédentes dans lequel la taille des spherulites est comprise entre 0,8 et 2 µm.

7. Mélange de PVDF selon l'une quelconque des revendications précédentes et d'un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et tel que :
- le bloc A est compatible avec le PVDF,
- le bloc B est incompatible avec le PVDF et est incompatible avec le bloc A,
- le bloc C est incompatible avec le PVDF, le bloc A et le bloc B.

8. Mélanges selon la revendication 7 dans lesquels le tribloc ABC est du Poly (méthyle méthacrylate*-b*-butadiène-*b*-styrène).

9. Pièces constituées du matériau selon l'une quelconque des revendications précédentes.

10. Procédé de synthèse de PVDF selon l'une quelconque des revendications 1 à 6 dans lequel :
• on réalise une dispersion de VF2 (fluorure de vinylidène) et du ou des éventuels comonomères dans l'eau, éventuellement à l'aide d'un tensioactif, la dite dispersion étant initialement mise en contact avec un amorceur non organique soluble dans l'eau capable de provoquer la polymérisation des monomères,
• puis, une partie du PVDF ayant été formée en présence de l'amorceur non organique soluble dans l'eau, on ajoute:
soit (i) un agent de transfert de chaînes capable de propager la polymérisation, la dite polymérisation est alors initiée par un amorceur non organique soluble dans l'eau ou par un amorceur organique,
soit (ii) un amorceur organique capable d'effectuer aussi du transfert de chaînes et éventuellement un amorceur non organique soluble dans l'eau.

## Claims

1. PVDF (polyvinylidene fluoride) homopolymer or copolymer, the comonomer being chosen from compounds containing a vinyl group capable of being opened by the action of free radicals in order to be polymerized and which contains, directly attached to this vinyl group, at least one fluorine atom, a fluoroalkyl group or a fluoroalkoxy group such that:
• it comprises a fraction of non-transferred chains of very high molar mass which are completely insoluble in the usual solvents for PVDF, such as DMF (dimethylformamide), DMSO (dimethyl sulphoxide) and NMP (N-methylpyrrolidone), the polymer fraction associated with these high-mass chains having a dynamic viscosity of greater than 50 kpoise at 230°C and at a shear rate of 100 s⁻¹;
• the size of the spherulites is between 0.5 and 4 µm.

2. PVDF according to Claim 1, chosen from vinylidene fluoride (VF₂) homopolymers and copolymers preferably containing at least 50% by weight of VF₂, the comonomer being chosen from chlorotrifluoroethylene (CTFE), hexafluoropropylene (HFP), trifluoroethylene (VF₃) and tetrafluoroethylene (TFE).

3. PVDF according to either of the preceding claims, in which the proportion of non-transferred chains of very high mass is between 2 and 30% by weight.

4. PVDF according to Claim 3, in which the proportion of non-transferred chains of very high mass is between 5 and 30% by weight.

5. PVDF according to Claim 4, in which the proportion of non-transferred chains of very high mass is between 15 and 25% by weight.

6. PVDF according to any one of the preceding claims, in which the size of the spherulites is between 0.8 and 2 µm.

7. Blend of PVDF according to any one of the preceding claims with an ABC triblock copolymer, the three blocks A, B and C being linked together in this order, each block being either a homopolymer or a copolymer obtained from two or more monomers, the A block being linked to the B block and the B block to the C block by means of a covalent bond or of an intermediate molecule linked to one of these blocks via a covalent bond and to the other block via another covalent bond, and such that:
- the A block is compatible with PVDF;
- the B block is incompatible with PVDF and is incompatible with the A block; and
- the C block is incompatible with PVDF, the A block and the B block

8. Blends according to Claim 7, in which the ABC triblock is poly(methyl methacrylate-*b*-butadiene-*b-*styrene).

9. Parts made of the material according to any one of the preceding claims.

10. Process for synthesizing this PVDF according to any one of Claims 1 to 6, in which:
• a dispersion of VF₂ (vinylidene fluoride) and of one or more optional comonomers in water is made, possibly with the aid of a surfactant, the said dispersion being initially brought into contact with a water-soluble non-organic initiator capable of causing the polymerization of the monomers;
• then, part of the PVDF having been formed in the presence of the water-soluble non-organic initiator, the following are added:
either (i) a chain transfer agent capable of propagating the polymerization, the said polymerization then being initiated by a water-soluble non-organic initiator or by an organic initiator,
or (ii) an organic initiator, also capable of accomplishing chain transfer, and optionally a water-soluble non-organic initiator.

## Patentansprüche

1. PVDF-Homopolymer oder -Copolymer (PVDF = Polyvinylidenfluorid), wobei das Comonomer unter Verbindungen mit einer Vinylgruppe, die zur Polymerisation durch Einwirkung von Radikalen geöffnet werden kann und die direkt an diese Vinylgruppe gebunden mindestens ein Fluoratom, eine Fluoralkylgruppe oder eine Fluoralkylgruppe enthält, ausgewählt ist, so daß:
• es eine Fraktion nicht übertragener Ketten mit sehr hoher Molmasse, die in den üblichen Lösungsmitteln für PVDF, wie DMF (Dimethylformamid), DMSO (Dimethylsulfoxid) und NMP (N-Methylpyrrolidon), völlig unlöslich ist, wobei die mit diesen Ketten mit hoher Masse assoziierte Polymerfraktion eine dynamische Viskosität von mehr als 50 kPoise bei 230°C und einer Schergeschwindigkeit von 100 s⁻¹ aufweist und
• die Sphärulitgröße zwischen 0,5 und 4 µm liegt.

2. PVDF nach Anspruch 1, ausgewählt unter Homo- und Copolymeren von Vinylidenfluorid (VF2), die vorzugsweise mindestens 50 Gew.-% VF2 enthalten, wobei das Comonomer unter Chlortrifluorethylen (CTFE), Hexafluorpropylen (HFP), Trifluorethylen (VF3) und Tetrafluorethylen (TFE) ausgewählt ist.

3. PVDF nach einem der vorhergehenden Ansprüche, in dem der Anteil an nicht übertragenen Ketten mit sehr hoher Masse zwischen 2 und 30 Gew.-% liegt.

4. PVDF nach Anspruch 3, in dem der Anteil an nicht übertragenen Ketten mit sehr hoher Masse zwischen 5 und 30 Gew.-% liegt.

5. PVDF nach Anspruch 4, in dem der Anteil an nicht übertragenen Ketten mit sehr hoher Masse zwischen 15 und 25 Gew.-% liegt.

6. PVDF nach einem der vorhergehenden Ansprüche, in dem die Sphärulitgröße zwischen 0,8 und 2 µm liegt.

7. Mischung von PVDF nach einem der vorhergehenden Ansprüche und einem ABC-Triblockcopolymer, wobei die drei Blöcke A, B und C in dieser Reihenfolge miteinander verbunden sind, es sich bei jedem Block um ein Homopolymer oder ein aus zwei oder mehr Monomeren erhaltenes Copolymer handelt, der Block A mit dem Block B und der Block B mit dem Block C über eine kovalente Bindung oder ein Zwischenmolekül, das über eine kovalente Bindung an den einen dieser Blöcke und über eine andere kovalente Bindung an den anderen Block gebunden ist, verbunden ist, und dergestalt, daß:
- der Block A mit dem PVDF verträglich ist,
- der Block B mit dem PVDF unverträglich ist und mit dem Block A unverträglich ist,
- der Block C mit dem PVDF, dem Block A und dem Block B unverträglich ist.

8. Mischungen nach Anspruch 7, in denen es sich bei dem ABC-Triblock um Poly(methylmethacrylat-*b-*butadien-b-styrol) handelt.

9. Aus dem Material nach einem der vorhergehenden Ansprüche hergestellte Teile.

10. Verfahren zur Synthese von PVDF nach einem der Ansprüche 1 bis 6, bei dem man:
• eine Dispersion von VF2 (Vinylidenfluorid) und einem oder mehreren fakultativen Comonomeren in Wasser herstellt, gegebenenfalls mit Hilfe eines Tensids, wobei man die Dispersion zunächst mit einem wasserlöslichen nichtorganischen Initiator, der dazu befähigt ist, die Polymerisation der Monomere zu bewirken, in Kontakt bringt,
• und dann einen Teil des in Gegenwart des wasserlöslichen nichtorganischen Initiators gebildeten PVDF entweder (i) mit einem Kettenübertragungsmittel, das dazu befähigt ist, die Polymerisation zu propagieren, wobei die Polymerisation dann durch einen wasserlöslichen nichtorganischen Initiator oder einen organischen Initiator initiiert wird,
oder (ii) mit einem organischen Initiator, der auch zur Herbeiführung einer Kettenübertragung befähigt ist, und gegebenenfalls einem wasserlöslichen nichtorganischen Initiator versetzt.
